# EUROPEAN PATENT SPECIFICATION

(11) **EP 4 470 875 B1**
(45) Date of publication and mention of the grant of the patent: **25.02.2026**
(21) Application number: 24179122.7
(22) Date of filing: 30.05.2024
(51) Int. Cl.: B62D 5/07

(54) **IMPROVED HYDRAULIC ARRANGEMENT FOR A WORK VEHICLE**
VERBESSERTE HYDRAULIKANORDNUNG FÜR EIN ARBEITSFAHRZEUG
DISPOSITIF HYDRAULIQUE AMELIORE POUR VEHICULE DE TRAVAIL

(30) Priority: 31.05.2023 IT 202300011103
(43) Date of publication of application: 04.12.2024
(73) Proprietor: CNH Industrial Italia S.p.A., 10156 Torino (IT)
(72) Inventor: BENEVELLI, Alessandro, 10156 Turin (IT); NONIS, Andrea, 10156 Turin (IT); FACCIOLO, Carlo, 10156 Turin (IT)
(74) Representative: CNH Industrial IP Department

(56) References cited:
- US-A- 4 517 800
- US-A- 5 826 676
- US-A1- 2022 186 753

## Description

### TECHNICAL FIELD

The present invention concerns a hydraulic arrangement, in particular a hydraulic arrangement for management of flow to a steering unit of a work vehicle.

The present invention finds its preferred, although not exclusive, application in agricultural vehicles such as tractors. Reference will be made to this application by way of example below.

### BACKGROUND OF THE INVENTION

Work vehicles such as agricultural tractors are provided with hydraulic systems voted to different functions, inter alia, steering assistance and operation and lubrication of the driveline.

Advanced steering system need a dedicate quantity of oil to allow its correct operation and such quantity of oil is in conflict with the need of the driveline that needs a preset quantity of oil, for instance, 8 l/min in every working situation, as shown in US4517800A, US2022/186753A1 and US5826676A.

In some operational conditions, the quantity of oil needed to steering system and to driveline is high and therefore it may happen that the flow rate provided by the pump is not enough to guarantee a sufficient quantity of oil to both the steering system and to the driveline.

Therefore, the need is felt to provide a sufficient oil quantity to steering system and to a driveline of a work vehicle with an economic and compact system.

An aim of the present invention is to satisfy the above mentioned needs in a cost-effective and optimized manner.

### SUMMARY OF THE INVENTION

The aforementioned aim is reached by a hydraulic arrangement and a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein the only Figure discloses a hydraulic arrangement according to the invention for a work vehicle.

### DETAILED DESCRIPTION OF THE INVENTION

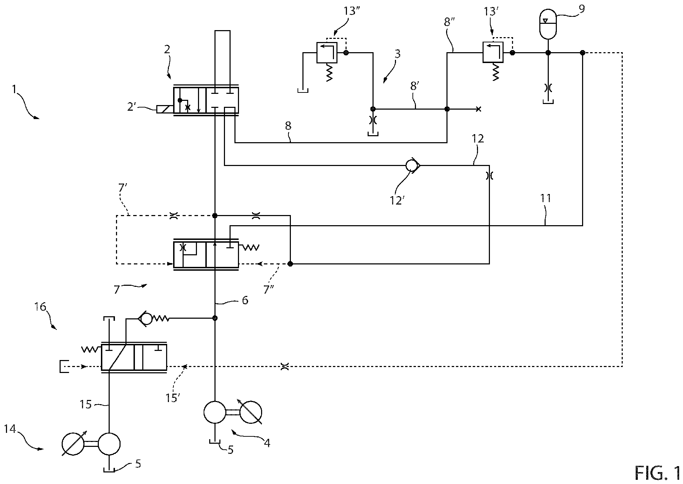

Figure 1 discloses a hydraulic arrangement 1 for a work vehicle (not shown) configured to supply oil to first operative system, such as a steering unit 2, and to a second operative system, such as a driveline 3 of the work vehicle.

Hydraulic arrangement 1 comprises a first pump 4 configured to suck fluid, such as oil, from a tank 5, pressurize this latter to provide a flow of pressurized fluid towards the steering unit 2 and driveline 3. In the following, with pump it is intended pump means carried by a torque source such as an internal combustion engine or an electric machine, as known and according to vehicular configuration.

The first pump 4 is fluidly connected to the steering unit 2 via a first conduit 6. In particular, a flow regulation valve 7 can be fluidly interposed in the first conduit 6 and is described in the following.

The steering unit 2 is represented in the drawings by a proportional five ways - two positions valve that is electrically actuated by a coil 2'.

The steering unit 2 valve is fluidly connected to driveline 3 by a second conduit 8. In particular, such second conduit 8 divides into a pair of branches, 8', 8'' of which a first branch 8' is fluidly connected to driveline and a second branch 8" is fluidly connected to accumulator means 9.

The second branch 8'' is furthermore fluidly connected via a third conduit 11 to the flow regulation valve 7.

The steering unit 2 valve is furthermore fluidly connected to via a fourth conduit 12, downstream to flow regulation valve 7, to conduit 6.

The hydraulic arrangement 1 further comprises check valve means 12' fluidly interposed in fourth conduit 12 and configured to allow the motion of the pressurized fluid only towards the steering unit 2 valve.

In detail, the steering unit 2 valve is configured to move between to limit positions, namely a first limit position wherein the fluid flowing into first conduit 6 may pass only through fourth conduit 12 towards second conduit 8 and a second position in which fluid directly flows from first conduit 6 towards second conduit 8, i.e. without passing through fourth conduit 12.

The flow regulation valve 7 is preferably a proportional three ways - two positions valve and is configured to move between to limit positions, namely a first limit position wherein the first conduit 6 is fluidly connected towards steering unit 2 valve and isolated to the third conduit 11 and a second limit position wherein the first conduit 6 is fluidly connected to both the steering unit 2 valve and the third conduit 11.

In detail, the flow regulation valve 7 is controlled by hydraulic pilot signals 7', 7'' respectively spilled from the first conduit 6 downstream to flow regulation valve 7 and from fourth conduit 12 upstream to check valve means 12'.

The hydraulic arrangement 1 further comprises first relief valve means 13' fluidly interposed on the second branch 8'' of second conduit 8 and configured to allow fluid passage through themselves only when a present pressure is achieved, such as 18.5 bar.

The hydraulic arrangement 1 further comprises second relief valve means 13'' fluidly interposed on the first branch 8' of second conduit 8 and configured to allow fluid passage through themselves for safety reason.

According to the invention, the hydraulic arrangement 1 comprises a second pump 14 fluidly interposed in parallel with respect to first pump 4 and configured to supply oil towards first conduit 6 if provided to driveline is below a predetermined pressure threshold. In detail, such pressure threshold is 18.5 bar.

The second pump 14 is the pump voted to provide pressurized oil flow to remote utilities of the work vehicle such as hydraulic cylinders, remote devices or trailer valves.

In particular, the second pump 14 is fluidly connected to the first conduit 6, downstream to the first pump 4 via a fifth conduit 15 and upstream to the flow regulating valve 7.

Advantageously, the hydraulic arrangement 1 comprises valve means 16 fluidly interposed on the fifth conduit 15 and configured to allow or deny the fluid passage through this latter.

In detail, valve means 16 comprises a proportional three ways - two positions valve configured to assume a first limit position wherein the pressurized fluid flow provided by the second pump 14 entirely flows towards first conduit 6 and a second limit position wherein the second pump 14 is isolated with respect to first conduit 6. In such case, the flow provided by second pump 14 may be used by other auxiliaries of the work vehicle.

In detail, valve means 16 are controlled by a hydraulic pilot signal 15' spilled from the driveline 3, in particular in the disclosed embodiment by the third conduit 11, upstream to first relief valve means 13'. The pilot signal 15' acts to allow passage of the valve means 16 from the first to the second limit position against detent means, such as spring means. This detent means are set to impose the 18.5 bar value of pilot signal 15' to allow complete passage to the second limit position.

Therefore, preferably the pressure threshold value of the first relief valve 13' is the same pressure threshold value that allows movement of valve means 16 that control the feeding of the second pump 14 towards first conduit 6.

Preferably, a check valve may be fluidly interposed on fifth conduit 15 downstream to valve means 16 and upstream to the junction to first conduit 6 to avoid passage of fluid from this latter towards second pump 14.

The hydraulic arrangement 1 further comprises, where needed, restrictors or other hydraulic devices that have not been described for sake of brevity and are, for sake of completeness, only represented in the schematic drawing.

The operation of the embodiment of the invention as described above is the following.

Fluid coming from first conduit 6 is regulated to pass entirely through conduit 6 or progressively through third conduit 11. If the steering unit valve 2 is in its first limit position, then the fluid present in the first conduit 6 flows via fourth conduit 12 towards driveline. If the steering unit valve 2 is controlled excited via coil 2', than fluid may flow through this latter towards second conduit 8 and then to driveline 3.

In particular, the above operation uses the pressurized fluid coming from first conduit 6 that can be provided exclusively by the first pump means 4 or by addition of the flow provided by second pump means 14. Indeed, till the pressure signal in third conduit 11 is below the 18,5 bar threshold, then the valve means 16 allows fluidic connection of the second pump 14 whose flow is provided to the first conduit 6 in addition to the one provided by the pump 4. When the pressure in the third conduit 11 reaches the 18,5 bar, then the valve means 16 deny the fluid passage of the flow provided by second pump 14 that can be used for other utilities of the vehicle.

In view of the foregoing, the advantages of a hydraulic arrangement and a work vehicle according to the invention are apparent.

Thanks to the proposed hydraulic arrangement is possible to satisfy the requirement of the steering unit and of the driveline in substantially all conditions.

Indeed, the requested 18.5 bar pressure at driveline can be always maintained since as soon as the pressure falls below such level, the second pump is controlled to add flow to the first pump.

The proposed control is reactive and therefore guarantees the 18.5 bar flow presence in any working situation.

Furthermore, the proposed hydraulic arrangement 1 is compact and does not increase excessively the complexity of the existing hydraulic arrangement.

It is clear that modifications can be made to the described hydraulic arrangement and work vehicle which do not extend beyond the scope of protection defined by the claims.

For example, the proposed valves and conduit topology may vary according to the specific typology and needs of work vehicle, steering unit and driveline.

Clearly, typology and number of pumps may vary and some elements such as accumulator means may be absent.

Moreover, as stated, even if steering system and lubrication arrangement are described, the proposed invention may be used for any needed operative system of the work vehicle that needs a specific flow of hydraulic fluid.

## Claims

1. Hydraulic arrangement (1) for a work vehicle, configured to provide an operative pressurized fluid flow towards a first operative system (2) and a second operative system(3) of said work vehicle, said hydraulic arrangement (1) comprises a first pump (4) fluidly connected to said first operative system (2) and to said second operative system (3) via a first conduit (6), said hydraulic arrangement (1) further comprising a second pump (14) fluidly interposed in parallel to said first pump (4) to said first conduit (6), said second pump (14) being configured to supply fluid towards said first conduit (6) if the pressure of the fluid provided to said second operative system (3) is below a predetermined pressure threshold value;
said hydraulic arrangement (1) further comprising a flow regulating valve (7) fluidly interposed on said conduit (6) between said first operative system (2) valve and said first pumping means (14) downstream to the junction of said second conduit (15), said hydraulic arrangement (1) further comprising a third conduit (11) fluidly interposed between flow regulating valve (7) and said second operative system (3), said flow regulating valve (7) being configured to regulate the flow of pressurized fluid provided by said pumping means (14, 15) to said first operative system (2) and to said second operative system (3) via said third conduit (11);
said hydraulic arrangement (1) is **characterized in that** it further comprises a fifth conduit (8) fluidly connecting said first operative system (2) valve and said second operative system (3), said fifth conduit (8) being fluidly connectable to said third conduit (11) via valve means (13').

2. Hydraulic arrangement according to claim 1, wherein said second pump (14) is fluidly connected by a second conduit (15) to said first conduit (6), and further comprising valve means (16) fluidly interposed on said second conduit (15) configured to allow or deny, at least partially, the passage of fluid from said second pump (14) to said first conduit (6).

3. Hydraulic arrangement according to claim 2, wherein said valve means (16) comprises a proportional valve.

4. Hydraulic arrangement according to claim 2 or 3, wherein said valve means (16) comprises a three ways, two position valve.

5. Hydraulic arrangement according to claim 2, 3 or 4, wherein said second pump means (14) are fluidly connectable by said valve means (16) to auxiliaries of said work vehicle.

6. Hydraulic arrangement according to any of claims 2 to 5, wherein said valve means (16) are controlled by a hydraulic pilot signal (15') taken from said second operative system (3), said hydraulic pilot signal (15') acting against retaining means configured to maintain said valve means (6) in a position to allow fluid connection of said second pump (14) to said first conduit (6).

7. Hydraulic arrangement according to claim 6, wherein said hydraulic pilot signal (15') is taken by said third conduit (11).

8. Hydraulic arrangement according to any of the foregoing claims, wherein hydraulic arrangement (1) further comprises a fourth conduit (12) fluidly connecting said first conduit (6) downstream to said flow regulating valve (7) to said first operative system (2) valve and a check valve (12') interposed on said fourth conduit (12) and configured to allow the passage of fluid only towards said first operative system (2) valve.

9. Hydraulic arrangement according to claim 8, wherein said flow regulating valve (7) is regulated by a pair of pilot hydraulic signals (7', 7") respectively spilled by said first conduit (6) downstream to said flow regulating valve (7) and by said fourth conduit (12).

10. -Hydraulic arrangement according to any of the preceding claims, said first operative system (2) valve being a proportional valve configured to assume at least two limit positions, wherein in a first position the fourth conduit (12) is fluidly connected to the fifth conduit (8) and the first conduit (6) is isolated from these latter and in a second position the first conduit (6) is fluidly connected to said fourth conduit (12) and fifth conduit (8).

11. Hydraulic arrangement according to claim 1, wherein said valve means (13') comprises a relief valve configured to allow passage of fluid from said third conduit (11) to said fifth conduit (8) if a preset pressure threshold value is overcome.

12. Hydraulic arrangement according to claim 11, wherein said preset pressure threshold of said relief valve is the same preset pressure threshold value under which said second pumping means (14) supply fluid towards said first conduit (16).

13. Hydraulic arrangement according to any of the preceding claims, wherein said first operative system (2) is a steering unit of said work vehicle and wherein said second operative system (3) is a driveline arrangement of said work vehicle.

14. Work vehicle comprising a first operative system (2), a second operative system (3) and a tank for storing an operative fluid and a hydraulic arrangement (1) according to any of the preceding claims for feeding said first operative system (2) and said second operative system (3).

## Patentansprüche

1. Hydraulikanordnung (1) für ein Arbeitsfahrzeug, dazu eingerichtet, einen betriebsbereiten druckbeaufschlagten Fluidstrom einem ersten Betriebssystem (2) und einem zweiten Betriebssystem (3) des Arbeitsfahrzeugs bereitzustellen, wobei die Hydraulikanordnung (1) eine erste Pumpe (4) aufweist, die über eine erste Leitung (6) fluidisch mit dem ersten Betriebssystem (2) und mit dem zweiten Betriebssystem (3) verbunden ist, wobei die Hydraulikanordnung (1) des Weiteren eine zweite Pumpe (14) aufweist, die parallel zur ersten Pumpe (4) zu der ersten Leitung (6) fluidisch zwischengeschaltet ist, wobei die zweite Pumpe (14) dazu eingerichtet ist, Fluid zu der ersten Leitung (6) zu fördern, wenn der Druck des dem zweiten Betriebssystem (3) bereitgestellten Fluids unter einem vorbestimmten Druckschwellenwert liegt;
wobei die Hydraulikanordnung (1) des Weiteren ein Durchflussregelventil (7) aufweist, das fluidisch an der Leitung (6) zwischen dem Ventil des ersten Betriebssystems (2) und den ersten Pumpmitteln (14) stromabwärts der Verzweigung der zweiten Leitung (15) angeordnet ist, wobei die Hydraulikanordnung (1) des Weiteren eine dritte Leitung (11) aufweist, die fluidisch zwischen dem Durchflussregelventil (7) und dem zweiten Betriebssystem (3) angeordnet ist, wobei das Durchflussregelventil (7) dazu eingerichtet ist, den von den Pumpmitteln (14, 15) zu dem ersten Betriebssystem (2) und zu dem zweiten Betriebssystem (3) über die dritte Leitung (11) bereitgestellten druckbeaufschlagten Fluidstrom zu regeln;
wobei die Hydraulikanordnung (1) **dadurch gekennzeichnet ist,**
**dass** sie des Weiteren eine fünfte Leitung (8) aufweist, die das Ventil des ersten Betriebssystems (2) fluidisch mit dem zweiten Betriebssystem (3) verbindet, wobei die fünfte Leitung (8) fluidisch über Ventilmittel (13') mit der dritten Leitung (11) verbindbar ist.

2. Hydraulikanordnung nach Anspruch 1, wobei die zweite Pumpe (14) über eine zweite Leitung (15) fluidisch mit der ersten Leitung (6) verbunden ist und des Weiteren Ventilmittel (16) aufweist, die fluidisch in der zweiten Leitung (15) zwischengeschaltet und dazu eingerichtet sind, den Durchgang von Fluid von der zweiten Pumpe (14) zu der ersten Leitung (6) zumindest teilweise zu ermöglichen oder zu verweigern.

3. Hydraulikanordnung nach Anspruch 2, wobei die Ventilmittel (16) ein Proportionalventil aufweisen.

4. Hydraulikanordnung nach Anspruch 2 oder 3, wobei die Ventilmittel (16) ein 3/2-Ventil aufweisen.

5. Hydraulikanordnung nach Anspruch 2, 3 oder 4, wobei die zweiten Pumpmittel (14) über die Ventilmittel (16) fluidisch mit Nebenverbrauchern des Arbeitsfahrzeugs verbindbar sind.

6. Hydraulikanordnung nach einem der Ansprüche 2 bis 5, wobei die Ventilmittel (16) durch ein hydraulisches Pilotsignal (15') gesteuert werden, das vom zweiten Betriebssystem (3) genommen ist, wobei das hydraulische Pilotsignal (15') gegen Haltemittel wirkt, die dazu eingerichtet sind, die Ventilmittel (6) in einer Position zu halten, die eine Fluidverbindung der zweiten Pumpe (14) zu der ersten Leitung (6) ermöglicht.

7. Hydraulikanordnung nach Anspruch 6, wobei das hydraulische Pilotsignal (15') von der dritten Leitung (11) genommen ist.

8. Hydraulikanordnung nach einem der vorhergehenden Ansprüche, wobei die Hydraulikanordnung (1) des Weiteren eine vierte Leitung (12), die fluidisch die erste Leitung (6) stromabwärts des Durchflussregelventils (7) mit dem Ventil des ersten Betriebssystems (2) verbindet, sowie ein Rückschlagventil (12') aufweist, das in der vierten Leitung (12) zwischengeschaltet und dazu eingerichtet ist, den Durchgang von Fluid ausschließlich in Richtung des Ventils des ersten Betriebssystems (2) zu ermöglichen.

9. Hydraulikanordnung nach Anspruch 8, wobei das Durchflussregelventil (7) durch ein Paar hydraulischer Pilotsignale (7', 7") geregelt wird, die jeweils von der ersten Leitung (6) stromabwärts des Durchflussregelventils (7) und von der vierten Leitung (12) abgezweigt sind.

10. Hydraulikanordnung nach einem der vorhergehenden Ansprüche, wobei das Ventil des ersten Betriebssystems (2) ein Proportionalventil ist, das dazu eingerichtet ist, zumindest zwei Endstellungen anzunehmen, wobei in einer ersten Stellung die vierte Leitung (12) fluidisch mit der fünften Leitung (8) verbunden ist und die erste Leitung (6) hiervon isoliert ist und wobei in einer zweiten Stellung die erste Leitung (6) fluidisch mit der vierten Leitung (12) und der fünften Leitung (8) verbunden ist.

11. Hydraulikanordnung nach Anspruch 1, wobei die Ventilmittel (13') ein Überdruckventil aufweisen, das dazu eingerichtet ist, den Durchgang von Fluid aus der dritten Leitung (11) zu der fünften Leitung (8) zu ermöglichen, wenn ein voreingestellter Druckschwellenwert überschritten wird.

12. Hydraulikanordnung nach Anspruch 11, wobei der voreingestellte Druckschwellenwert des Überdruckventils derselbe voreingestellte Druckschwellenwert ist, unter dem die zweiten Pumpmittel (14) Fluid zu der ersten Leitung (16) fördern.

13. Hydraulikanordnung nach einem der vorhergehenden Ansprüche, wobei das erste Betriebssystem (2) eine Lenkeinheit des Arbeitsfahrzeugs ist und wobei das zweite Betriebssystem (3) eine Antriebsstranganordnung des Arbeitsfahrzeugs ist.

14. Arbeitsfahrzeug, das ein erstes Betriebssystem (2), ein zweites Betriebssystem (3) und einen Tank zur Speicherung eines Betriebsfluids sowie eine Hydraulikanordnung (1) nach einem der vorhergehenden Ansprüche zum Versorgen des ersten Betriebssystems (2) und des zweiten Betriebssystems (3) aufweist.

## Revendications

1. Agencement hydraulique (1) pour un véhicule de travail, configuré pour fournir un flux de fluide pressurisé opérationnel vers un premier système opérationnel (2) et un second système opérationnel (3) dudit véhicule de travail, ledit agencement hydraulique (1) comprenant une première pompe (4) raccordée fluidiquement audit premier système opérationnel (2) et audit second système opérationnel (3) via un premier conduit (6), ledit agencement hydraulique (1) comprenant en outre une seconde pompe (14) interposée fluidiquement en parallèle à ladite première pompe (4) par rapport audit premier conduit (6), ladite seconde pompe (14) étant configurée pour alimenter en fluide ledit premier conduit (6) si la pression du fluide fourni audit second système opérationnel (3) est inférieure à une valeur seuil de pression prédéterminée ;
ledit agencement hydraulique (1) comprenant en outre une vanne de régulation de débit (7) interposée fluidiquement sur ledit conduit (6) entre la vanne dudit premier système opérationnel (2) et ledit premier moyen de pompage (14) en aval de la jonction dudit second conduit (15), ledit agencement hydraulique (1) comprenant en outre un troisième conduit (11) interposé fluidiquement entre la vanne de régulation de débit (7) et ledit second système opérationnel (3), ladite vanne de régulation de débit (7) étant configurée pour réguler le flux de fluide pressurisé fourni par lesdits moyens de pompage (14, 15) audit premier système opérationnel (2) et audit second système opérationnel (3) via ledit troisième conduit (11) ;
ledit agencement hydraulique (1) est **caractérisé en ce qu'**il comprend en outre un cinquième conduit (8) raccordant fluidiquement la vanne dudit premier système opérationnel (2) et ledit second système opérationnel (3), ledit cinquième conduit (8) pouvant être raccordé fluidiquement audit troisième conduit (11) via des moyens de vanne (13').

2. Agencement hydraulique selon la revendication 1, dans lequel ladite seconde pompe (14) est raccordée fluidiquement par un second conduit (15) audit premier conduit (6), et comprenant en outre un moyen de vanne (16) interposé fluidiquement sur ledit second conduit (15) configuré pour autoriser ou empêcher, au moins partiellement, le passage du fluide de ladite seconde pompe (14) vers ledit premier conduit (6).

3. Agencement hydraulique selon la revendication 2, dans lequel ledit moyen de vanne (16) comprend une vanne proportionnelle.

4. Agencement hydraulique selon la revendication 2 ou 3, dans lequel ledit moyen de vanne (16) comprend une vanne à trois voies et deux positions.

5. Agencement hydraulique selon la revendication 2, 3 ou 4, dans lequel lesdits seconds moyens de pompage (14) peuvent être raccordés fluidiquement par ledit moyen de vanne (16) à des auxiliaires dudit véhicule de travail.

6. Agencement hydraulique selon l'une quelconque des revendications 2 à 5, dans lequel lesdits moyens de vanne (16) sont commandés par un signal pilote hydraulique (15') provenant dudit second système opérationnel (3), ledit signal pilote hydraulique (15') agissant contre des moyens de retenue configurés pour maintenir lesdits moyens de vanne (6) dans une position permettant le raccordement fluidique de ladite seconde pompe (14) audit premier conduit (6)

7. Agencement hydraulique selon la revendication 6, dans lequel ledit signal pilote hydraulique (15') est capté au niveau dudit troisième conduit (11).

8. Agencement hydraulique selon l'une quelconque des revendications précédentes, dans lequel l'agencement hydraulique (1) comprend en outre un quatrième conduit (12) raccordant fluidiquement ledit premier conduit (6) en aval de ladite vanne de régulation de débit (7) à la vanne dudit premier système opérationnel (2) et un clapet antiretour (12') interposé sur ledit quatrième conduit (12) et configuré pour n'autoriser le passage du fluide que vers la vanne dudit premier système opérationnel (2).

9. Agencement hydraulique selon la revendication 8, dans lequel ladite vanne de régulation de débit (7) est régulée par une paire de signaux pilotes hydrauliques (7', 7") respectivement prélevés sur ledit premier conduit (6) en aval de ladite vanne de régulation de débit (7) et sur ledit quatrième conduit (12).

10. Agencement hydraulique selon l'une quelconque des revendications précédentes, la vanne dudit premier système opérationnel (2) étant une vanne proportionnelle configurée pour adopter au moins deux positions limites, dans lequel, dans une première position, le quatrième conduit (12) est raccordé fluidiquement au cinquième conduit (8) et le premier conduit (6) est isolé de ces derniers et, dans une seconde position, le premier conduit (6) est raccordé fluidiquement audit quatrième conduit (12) et audit cinquième conduit (8).

11. Agencement hydraulique selon la revendication 1, dans lequel ledit moyen de vanne (13') comprend une soupape de décharge configurée pour permettre le passage du fluide depuis ledit troisième conduit (11) vers ledit cinquième conduit (8) si une valeur seuil de pression prédéterminée est dépassée.

12. Agencement hydraulique selon la revendication 11, dans lequel ladite valeur seuil de pression prédéterminée de ladite soupape de décharge est la même valeur seuil de pression prédéterminée au-dessous de laquelle lesdits seconds moyens de pompage (14) alimentent en fluide ledit premier conduit (16).

13. Arrangement hydraulique selon l'une quelconque des revendications précédentes, dans lequel ledit premier système opérationnel (2) est une unité de pilotage dudit véhicule de travail et dans lequel ledit second système opérationnel (3) est un agencement d'arbres de transmission dudit véhicule de travail.

14. Véhicule de travail comprenant un premier système opérationnel (2), un second système opérationnel (3) et un réservoir pour stocker un fluide opérationnel et un agencement hydraulique (1) selon l'une quelconque des revendications précédentes pour alimenter ledit premier système opérationnel (2) et ledit second système opérationnel (3).
